# EUROPEAN PATENT APPLICATION

(11) **EP 4 641 757 A1**
(43) Date of publication of application: **29.10.2025**
(21) Application number: 24888981.8
(22) Date of filing: 23.10.2024
(51) Int. Cl.: H01M 10/54, C22B 1/02, C22B 7/00, H01M 4/525, H01M 4/505, H01M 10/052

(54) **METHOD FOR REGENERATING POSITIVE ELECTRODE ACTIVE MATERIAL AND REGENERATED POSITIVE ELECTRODE ACTIVE MATERIAL MANUFACTURED THEREBY**

(30) Priority: 06.11.2023 KR 20230152017; 22.10.2024 KR 20240144952
(71) Applicant: LG Energy Solution, Ltd., Seoul 07335 (KR)
(72) Inventor: PARK, Se Ho, Daejeon 34122 (KR); LEE, Sanghyun, Daejeon 34122 (KR); KIM, Jaesung, Daejeon 34122 (KR); CHOI, Jeong Mi, Daejeon 34122 (KR); LEE, Jeongbae, Daejeon 34122 (KR); NA, Sangmun, Daejeon 34122 (KR)
(74) Representative: Hoffmann Eitle
(86) International application number: PCT/KR2024/016170
(87) International publication number: WO 2025/100791

(57) **Abstract**

The present invention relates to a method of recycling a cathode active material and a recycled cathode active material prepared using the same. More particularly, the present inventio relates to a method of recycling a cathode active material, the method including step (a) of heat-treating a waste cathode containing a current collector and a cathode active material layer coated on the current collector in the air or under oxygen atmosphere to recover a cathode active material; step (b) of adding a lithium precursor to the recovered cathode active material and performing heat treatment in the air to recover the crystal structure of the cathode active material; step (c) of adding a dopant precursor to the cathode active material having the recovered crystal structure and performing doping by heat treatment; and step (d) of washing the doped cathode active material with a washing solution and a recycled cathode active material prepared using the same.

According to the present invention, the present invention has an effect of providing a method of recycling a cathode active material having improved capacity characteristics and lifespan characteristics and excellent crack resistance by doping a recycled cathode active material with a predetermined dopant according to a predetermined method and a recycled cathode active material prepared using the same.

## Description

### [Technical Field]

### [Cross-Reference to Related Applications]

This application claims priority to Korean Patent Application No. 10-2023-0152017, filed on November 06, 2023, and Korean Patent Application No. 10-2024-0144952, re-filed on October 22, 2024, based on the priority of the above patent, in the Korean Intellectual Property Office, the disclosures of each of which are incorporated herein by reference.

The present invention relates to a method of recycling a cathode active material and a recycled cathode active material prepared using the same, and more particularly, to a method of recycling a cathode active material, the method being capable of implementing improved capacity characteristics and lifespan characteristics and excellent crack resistance by doping a recycled cathode active material with a predetermined dopant according to a predetermined method, and a recycled cathode active material prepared using the same.

In addition, the present invention relates to a method of recycling a recycled cathode active material, the method being capable of achieving environmental friendliness by not using acids and thus reducing process costs as neutralization and wastewater treatment are not required, recycling a cathode active material by not decomposing the cathode active material and thus preventing loss of metal elements, recovering a current collector without decomposing the current collector, and preventing the generation of toxic gases or explosions by not using organic solvents; and being applicable to mass production by using an easy-to-manage process such as heat treatment or precipitation, and a recycled cathode active material prepared using the method and having excellent electrochemical performance, resistance characteristics, and capacity characteristics.

### [Background Art]

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode.

In the cathode active material layer, a lithium-based oxide is mainly used as an active material. In the anode active material layer, a carbon material is mainly used as an active material. In general, the lithium-based oxide contains a rare metal such as cobalt, nickel, or manganese. Accordingly, studies on recovery and recycling of rare metals from the cathodes of lithium secondary batteries that are discarded after use or cathode scraps (hereinafter referred to as "waste cathodes") generated when manufacturing lithium secondary batteries are being actively conducted.

According to the related arts for recovering rare metals from a waste cathode, after dissolving a waste cathode using hydrochloric acid, sulfuric acid, or nitric acid, rare metals such as cobalt, manganese, and nickel are extracted using an organic solvent, and then the extracted metals are used as raw materials for synthesizing a cathode active material.

However, in the case of the method of extracting rare metals using an acid, a neutralization process and a wastewater treatment process are necessary due to environmental pollution problems, which greatly increases process costs. In addition, lithium, which is the main metal of a cathode active material, cannot be recovered by the above method.

To solve these drawbacks, methods (direct recycling methods) of directly recycling a cathode active material from a waste cathode without decomposing the cathode active material are being studied. As such methods, there are mainly four methods such as calcination, solvent dissolution, aluminum (Al) foil dissolution, and crushing & screening.

The calcination method can be performed in a simple process, but has disadvantages such as formation of foreign substances on the surface of a recycled cathode active material, which degrades the rate performance of a battery. In addition to the above disadvantages, waste gas is generated, and energy consumption is excessive. In particular, since an excessive amount of initial washing water must be used to remove foreign substances such as LiF, it is difficult to apply the above method to the recycling process. In addition, the same amount of wastewater is generated, and the functional coating layer of the recycled cathode active material and Li in the lattice may be lost due to washing. In addition, the occurrence of cracks that reduce the output performance of a secondary battery increases. By-products generated during a degradation process may be removed by washing, and Li loss may be overcome to some extent by replenishing Li sources. However, physically generated cracks cannot be restored to the same particle size distribution as a virgin cathode active material using conventional direct recycled methods. The occurrence of cracks results in an increase in the fine power and specific surface area of the recycled cathode active material, which promotes side reactions between an electrolyte and the surface of a recycled cathode active material, which reduces active lithium and increases the overall cell resistance, ultimately degrading the lifespan characteristics of a battery.

In addition, when using the solvent dissolution method, a recycled cathode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled cathode active material, and there is a risk of explosion due to hydrogen gas generated in a process of removing aluminum foil.

In addition, the crushing & screening method can be performed through the simplest process among the above methods. However, it is difficult to completely separate a current collector and a cathode active material, the particle size distribution of the cathode active material is changed during a crushing process, and the battery characteristics of the recycled cathode active material are degraded due to a residual binder.

Therefore, there is an urgent need to develop a method of recycling safely and environmentally a cathode active material having excellent rate performance and lifespan characteristics at a low cost without loss of metal elements from a waste cathode; improving crack resistance; and significantly reducing waste water.

### [Disclosure]

### [Technical Problem]

Therefore, the present invention has been made in view of the above problems, and it is one object of the present invention to provide a method of recycling a cathode active material, the method being capable of improving capacity characteristics and lifespan characteristics and achieving excellent crack resistance by doping a recycled cathode active material with a predetermined dopant according to a predetermined method and a recycled cathode active material prepared using the same.

It is another object of the present invention to provide a method of recycling a recycled cathode active material, the method being capable of achieving environmental friendliness by not using acids and thus reducing process costs as neutralization and wastewater treatment are not required, recycling a cathode active material by not decomposing the cathode active material and thus preventing loss of metal elements, recovering a current collector without decomposing the current collector, and preventing the generation of toxic gases or explosions by not using organic solvents; and being applicable to mass production by using an easy-to-manage process such as heat treatment or precipitation, and a recycled cathode active material prepared using the method and having excellent electrochemical performance, resistance characteristics, and capacity characteristics.

The above and other objects can be accomplished by the present invention described below.

### [Technical Solution]

I) In accordance with one aspect of the present invention, provided is a recycled cathode active material including one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide, wherein the recycled cathode active material is doped with a dopant and has no coating layer.
II) According I), based on a total weight of the recycled cathode active material, the dopant may be included in an amount of 100 to 2000 ppm.
III) According I) or II), the dopant may include one or more selected from the group consisting of B, Ti, S, Na, Nb, P, Al, F, Mg, Mn, K, Y, Si, Sn, W, C, and N.
IV) According I) to III), based on energy dispersive spectroscopy (EDS) surface mapping, in the recycled cathode active material, an amount of a dopant element coated on a surface thereof without being doped may be 10 ppm or less.
V) According I) to IV), based on energy dispersive spectroscopy (EDS) surface mapping, the recycled cathode active material may include 40 to 45 % by weight of carbon element, 25 to 30 % by weight of oxygen element, and 25 to 30 % by weight of nickel element.
VI) In accordance with another aspect of the present invention, provided is a method of recycling a cathode active material, the method including (a) heat-treating a waste cathode containing a current collector and a cathode active material layer coated on the current collector in the air or under oxygen atmosphere to recover a cathode active material; (b) adding a lithium precursor to the recovered cathode active material and performing heat treatment in the air to restore a crystal structure of the cathode active material; (c) adding a dopant precursor to the cathode active material having the restored crystal structure and performing doping by heat treatment; and (d) washing the doped cathode active material with a washing solution.
VII) According VI), in step (a), the heat treatment may be performed at 300 to 650 °C.
VIII) According VI) or VII), in step (b), the heat treatment may be performed at 400 to 1000 °C.
IX) According VI) to VIII), in step (b), the lithium precursor may include one or more selected from the group consisting of LiOH, Li₂CO₃, LiNO₃, and Li₂O.
X) According VI) to IX), in step (c), the heat treatment may be performed at 300 to 1000 °C.
XI) According VI) to X), in step (c), the dopant precursor may be a compound that provides one or more elements selected from the group consisting of B, Ti, S, Na, Nb, P, Al, F, Mg, Mn, K, Y, Si, Sn, C, and N as a dopant.
XII) According VI) to XI), in step (d), the washing solution may be water.
XIII) According VI) to XII), the method of recycling a cathode active material may include (a-2) washing the recovered cathode active material with a washing solution; and/or (b-2) washing the cathode active material having the recovered crystal structure.
XIV) According VI) to XIII), in step (a-2), the washing solution may be water, or a basic aqueous lithium compound solution with an amount of greater than 0 % by weight and 15 % by weight or less, and in step (b-2), the washing solution may be water.
XV) According VI) to XIV), in step (c), based on a total weight of the recycled cathode active material, the dopant precursor may be added in an amount of 100 to 2000 ppm (based on a dopant element).
XVI) According to VI) to XV), the cathode active material may preferably include one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide.
XVII) In accordance with still another aspect of the present invention, provided is a recycled cathode active material prepared using the method according to VI) to XVI).
XVIII) In accordance with yet another aspect of the present invention, provided is a secondary battery including the recycled cathode active material according to I) to XVII).

### [Advantageous Effects]

According to the present invention, the present invention has an effect of providing a method of recycling a cathode active material, the method being capable of improving capacity characteristics and lifespan characteristics and achieving excellent crack resistance by doping a recycled cathode active material with a predetermined dopant according to a predetermined method and a recycled cathode active material prepared using the same.

In addition, according to the present invention, the present invention has an effect of providing a method of recycling a cathode active material, the method being capable of achieving environmental friendliness by not using acids and thus reducing process costs as neutralization and wastewater treatment are not required; being capable of preventing loss of metal elements by recycling a cathode active material without decomposing the cathode active material; being capable of recovering a current collector by not dissolving the current collector; being capable of preventing generation of toxic gases or explosion by not using organic solvents; and being suitable for mass production by using an easy-to-manage process such as heat treatment or precipitation and a recycled cathode active material prepared using the method and having excellent electrochemical performance and resistance characteristics.

### [Description of Drawings]

The following drawings attached to this specification illustrate embodiments of the present invention, and are presented to further understand the technical idea of the present invention in combination with the detailed description described below. Accordingly, the present invention is not limited to these drawings.
FIG. 1 is a drawing showing cathode scraps discarded after cutting an electrode plate from a cathode sheet.
FIG. 2 is a flowchart for explaining a process for recycling a cathode active material according to one embodiment of the present invention.
FIG. 3 includes conceptual diagrams schematically illustrating the structures of the recycled cathode active materials prepared in Example 1 and Comparative Examples 1 to 3, respectively.
FIGS. 4 and 5 are energy dispersive spectrometer (EDS) cross-sectional mapping images of the recycled cathode active materials prepared in Example 1 and Comparative Example 1, respectively. As shown in FIGS. 4 and 5, no B₂O₃ coating layer is found.
FIGS. 6 and 7 are energy dispersive spectrometer (EDS) cross-sectional mapping images of the recycled cathode active materials prepared in Comparative Examples 2 and 3, respectively. As shown in FIGS. 6 and 7, boron coating layers were identified. Elemental analysis was performed at points #11, #13, #15, and #16 where boron coating layers were formed and at points #12 and #14 where boron coating layers were not formed.
FIG. 8 includes XPS graphs showing changes in the content of detected elements according to etching time of the recycled cathode active materials prepared in Example 1 and Comparative Examples 1 to 3, respectively.
FIG. 9 is a graph showing the results of initial charge/discharge capacity of coin half cells with the cathode active materials recycled in Example 1 and Comparative Examples 1 to 3.
FIG. 10 is a graph showing the change in capacity retention according to the cycle number (Cycle No.) as the results of coin half cell evaluation for each of the recycled cathode active materials prepared in Example 1 and Comparative Examples 1 to 3.

### [Best Mode]

Hereinafter, a method of recycling a cathode active material according to the present invention and a recycled cathode active material prepared using the same are described in detail.

The present inventors confirmed that, while researching a method of further improving the capacity characteristics and lifespan characteristics of a recycled cathode active material by directly recycling a cathode active material from a waste cathode without decomposing the cathode active material (direct recycling method), when doping was performed according to a predetermined method instead of the conventional method of coating a recycled cathode active material with a predetermined dopant, the crack resistance of the recycled cathode active material was improved. In addition, when the recycled cathode active material of the present invention was applied to a battery, the capacity characteristics and lifespan characteristics thereof were greatly improved. Based on these results, the present inventors conducted further studies to complete the present invention.

The method of recycling a cathode active material of the present invention includes step (a) of heat-treating a waste cathode containing a current collector and a cathode active material layer coated on the current collector in the air or under oxygen atmosphere to recover a cathode active material; step (b) of adding a lithium precursor to the recovered cathode active material and performing heat treatment in the air to recover the crystal structure of the cathode active material; step (c) of adding a dopant precursor to the cathode active material having the recovered crystal structure and performing doping by heat treatment; and step (d) of washing the doped cathode active material with a washing solution. In this case, the capacity characteristics and lifespan characteristics of the recycled cathode active material may be improved, and crack resistance may be excellent. In addition, environmental friendliness may be achieved by not using acids, and thus process costs may be reduced as neutralization and wastewater treatment are not required. In addition, the cathode active material is recycled without decomposition, so there are no discarded metal elements. In addition, a current collector may be recovered without decomposing the current collector. In addition, since no organic solvents are used, the generation of toxic gases or explosions may be prevented. In addition, by using an easy-to-manage process such as heat treatment or precipitation, a cathode active material suitable for mass production may be provided. In addition, a recycled cathode active material prepared using the method of the present invention may have excellent electrochemical performance and resistance characteristics.

Hereinafter, each step of the method of recycling a cathode active material according to the present invention is described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### (a) Recovering cathode active material from waste cathode

Step (a) of recovering a cathode active material from a waste cathode according to the present invention may be a step of heat-treating a waste cathode containing a current collector and a cathode active material layer coated on the current collector to recover a cathode active material, preferably a step of heat-treating, at 300 to 650 °C in the air, a waste cathode containing a cathode active material layer including 60 mol% or more of Ni of transition metals on a current collector to thermally decompose a binder and a conductive material in the cathode active material layer to recover a cathode active material from the cathode active material layer. In this case, a simple process may be implemented, and a binder, a conductive material, and a current collector may be completely removed.

The waste cathode may be preferably a cathode separated from a lithium secondary battery discarded after use, or a defective cathode sheet or cathode scrap generated in a process of manufacturing a lithium secondary battery, more preferably a cathode scrap remaining after blanking a cathode sheet to obtain a cathode plate.

The cathode active material layer of step (a) may preferably include a cathode active material, a binder, and a conductive material.

The cathode active material may include preferably one or more selected from the group consisting of a lithium cobalt oxide such as LiCoO₂ (hereinafter referred to as "LCO"); a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the cathode active material may be a nickel manganese-based lithium composite metal oxide, an NCM-based lithium composite transition metal oxide, or a mixture thereof. In this case, reversible capacity and thermal stability may be excellent.

As another specific example, the cathode active material may be a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1.

For example, based on 100 mol% in total of metals other than lithium (Li), the cathode active material may include nickel (Ni) in an amount of 60 mol% or more, preferably 80 mol% or more, more preferably 81 mol% or more, still more preferably 81 to 95 mol%, still more preferably 85 to 95 mol%. Within this range, initial discharge capacity, rate performance, capacity characteristics, and resistance characteristics may be excellent.

In the present disclosure, the nickel (Ni) content may be measured by ion chromatography (IC) commonly used in the technical field to which the present invention pertains. As a specific example, an ion chromatography (IC)-inductively coupled plasma (ICP) analyzer, an IC-ICP-MS analyzer, or an IC-ICP-AEC analyzer may be used to measure the nickel content.

For example, the conductive material may be a carbon-based conductive material, preferably carbon black, carbon nanotubes (CNTs), or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, the heat treatment may be performed under an air atmosphere or under an oxygen atmosphere. In this case, since the binder and conductive material are removed by thermal decomposition into CO₂ and H₂O, the cathode active material is separated from the current collector, and the separated cathode active material may be easily sorted in powder form.

The heat treatment temperature may be preferably 400 to 600 °C, more preferably 500 to 600 °C, still more preferably 530 to 580 °C. Within this range, since a current collector is not melted and only a binder is removed, a cathode active material may be easily separated from the current collector.

For example, the heat treatment time may be preferably 10 minutes to 5 hours, more preferably 30 minutes to 5 hours, still more preferably 30 minutes to 2 hours, still more preferably 30 minutes to 1 hour. Within this range, since a current collector is not melted and only a binder is removed, a cathode active material may be easily separated from the current collector.

In the present disclosure, the heat treatment time is time of heat treatment performed at the corresponding heat treatment temperature, and does not include time required to reach the corresponding heat treatment temperature.

For example, the heat treatment may be performed at a temperature increase rate of 1 to 20 °C/min, preferably 3 to 10 °C/min 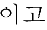 , more preferably 3 to 7 °C/min. Within this range, heat treatment may be performed without causing strain to heat treatment equipment, and thermal shock to cathode scraps may be prevented.

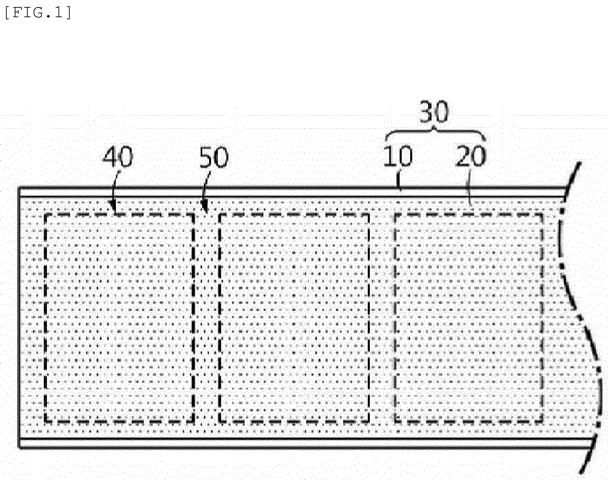

FIG. 1 below is a drawing showing cathode scraps discarded after cutting an electrode plate from a cathode sheet.

Referring to FIG. 1, Aluminum foil 10, which is a long sheet-shaped cathode current collector, is coated with a cathode active material layer 20 including a cathode active material, a conductive material, and a binder to obtain a cathode sheet 30. Then, a cathode plate 40 is obtained by blanking the cathode sheet 30 to a certain size. At this time, portions remaining after the blanking are the cathode scraps 50. The blanking may be a means for cutting the cathode sheet.

In addition, the cathode active material layer 20 is formed by coating the aluminum foil 10 with slurry obtained by mixing a cathode active material, a conductive material, a binder, and a solvent. Since the slurry is very sensitive to environmental factors such as temperature, it is very difficult to determine the coating conditions. Accordingly, waste cathode sheets are generated in significant quantities until the conditions for manufacturing the cathode sheet 30 of desired quality are determined through a predetermined test.

For reference, in the examples below, cathode scraps were used as waste cathodes.

### Washing recovered cathode active material

The method of recycling a cathode active material according to the present invention may include step (a-2) of washing the recovered cathode active material (hereinafter referred to as 'pre-washing'). In this case, metal fluorides such as LiF that may exist on the surface of the recycled cathode active material may be removed, and the surface is modified, thereby improving the rate performance of a battery.

During the heat treatment, the binder and conductive material in the cathode active material are thermally decomposed to generate CO₂ and H₂O. In this process, the CO₂ and H₂O may react with lithium on the surface of the cathode active material to form Li₂CO₃ and LiOH. Fluorine (F) present in a binder such as PVdF may react with metal elements constituting the cathode active material to form LiF or metal fluorides. When LiF or metal fluorides remain, the battery characteristics deteriorate when the cathode active material is reused.

For example, step (a-2) of washing the recovered cathode active material may be a step of mixing the recovered cathode active material with a washing solution and washing the recovered cathode active material by filtration through a filter press. In this case, since the residual F content is determined by the amount of a rinse solution, there is no need to replace equipment such as a stirring tank even when the amount of a cathode active material to be washed increases. In addition, the total amount of washing solution including the initial washing solution and the rinse solution may be significantly reduced, thereby reducing the amount of wastewater, wastewater treatment costs, and environmental pollution. In addition, the amount of the initial washing solution injected into a stirring tank may be minimized. In addition, by controlling the amount of the rinse solution, the residual F component may be easily removed and the rate performance of a battery may be improved.

In step (a-2) of performing washing, the filter press may preferably be operated under an air pressure of 2 to 10 bar, more preferably 3 to 9 bar, still more preferably 3 to 8 bar, still more preferably 3 to 7 bar, most preferably 3 to 6 bar. Within this range, since the residual F content is determined by the amount of a rinse solution, there is no need to replace equipment such as a stirring tank even when the amount of a cathode active material to be washed increases. In addition, the total amount of washing solution including the initial washing solution and the rinse solution may be significantly reduced, thereby reducing the amount of wastewater, wastewater treatment costs, and environmental pollution. In addition, the amount of the initial washing solution injected into a stirring tank may be minimized. In addition, by controlling the amount of the rinse solution, the residual F component may be easily removed and the rate performance of a battery may be improved.

In step (a-2) of performing washing, the filter press may preferably include a filter cloth having a permeability of 0.1 to 15 cc/cm²(sec), more preferably 0.2 to 10 cc/cm²(sec), still more preferably 0.3 to 5 cc/cm² (sec), still more preferably 0.5 to 2 cc/cm²(sec), most preferably 0.6 to 1 cc/cm² (sec). Within this range, since the residual F content is determined by the amount of a rinse solution, there is no need to replace equipment such as a stirring tank even when the amount of a cathode active material to be washed increases. In addition, the total amount of washing solution including the initial washing solution and the rinse solution may be significantly reduced, thereby reducing the amount of wastewater, wastewater treatment costs, and environmental pollution. In addition, the amount of the initial washing solution injected into a stirring tank may be minimized. In addition, by controlling the amount of the rinse solution, the residual F component may be easily removed and the rate performance of a battery may be improved.

As the filter cloth, any material commonly used for filter presses may be used without particular limitation as long as the material follows the definition of the present invention, and a specific example is polypropylene material.

The filter press of the present invention is not particularly limited in the type or material thereof as long as the filter press conforms to the definition of the present invention and is physically and chemically stable to cathode active material slurry. For example, the filter press may include a frame, a filter plate, a filter cloth, a filter cloth pressurizing device, a filter plate separating device, a filter cloth washing device, and a transfer pump.

In step (a-2) of performing washing, the washing solution may be preferably water or a basic aqueous lithium compound solution. In this case, an F component remaining on the surface of the recycled cathode active material may be completely removed with a small amount of washing solution, which may significantly reduce wastewater generation and improve the rate performance of a battery.

In the present disclosure, neutral water may be used without any special limitation. For example, distilled water and ion-exchanged water may be used.

For example, in step (a-2) of performing washing, the washing solution may be a basic aqueous lithium compound solution. In this case, a trace amount of a binder that may remain on the surface of the recovered cathode active material after thermal decomposition in step (a) may be removed. In addition, lithium that may be eluted during washing may be replenished without eluting transition metals present in the recovered cathode active material. When an aqueous acidic solution, such as sulfuric acid or hydrochloric acid, is used as the washing solution, the F component on the surface of the cathode active material may be removed, but the transition metals present in the cathode active material may be eluted, degrading the performance of the recycled cathode active material.

The basic aqueous lithium compound solution may preferably include a basic lithium compound in an amount of greater than 0 % by weight and 15 % by weight or less, more preferably greater than 0 % by weight and 10 % by weight or less, still more preferably 0.5 to 5 % by weight. Within this range, LiF and metal fluorides as F components formed on the surface of the cathode active material during the preceding heat treatment process may be removed, thereby realizing an excellent surface modification effect.

Step (a-2) of performing washing may preferably include step (a1) of mixing the recovered cathode active material with a washing solution to form slurry; and step (a2) of feeding the slurry into a filter press and performing filtration. More preferably, step (a-2) may include step (a1) of mixing the recovered cathode active material with a washing solution to form slurry; step (a2) of feeding the slurry into a filter press and performing filtration; and step (a3) of rinsing filter cake by pouring a rinse solution into the filter press. In this case, since the residual F content is determined by the amount of a rinse solution, there is no need to replace equipment such as a stirring tank even when the amount of a cathode active material to be washed increases. In addition, the total amount of washing solution including the initial washing solution and the rinse solution may be significantly reduced, thereby reducing the amount of wastewater, wastewater treatment costs, and environmental pollution. In addition, the amount of the initial washing solution injected into a stirring tank may be minimized. In addition, by controlling the amount of the rinse solution, the residual F component may be easily removed and the rate performance of a battery may be improved.

Step (a1) of mixing the recovered cathode active material with a washing solution to form slurry may be preferably a step of forming slurry by stirring the recovered cathode active material and water or a basic aqueous lithium compound solution using an agitator. In this case, the surface of the cathode active material may be modified, so foreign substances such as LiF or metal fluorides generated on the surface of the cathode active material during the previous heat treatment process may be effectively removed.

For example, the agitator may be an impeller-type, magnetic-type, and/or ultrasonic agitator, without being limited thereto.

For example, the stirring may be performed for less than a week, preferably less than a day, more preferably 1 hour or less, 40 minutes or less, 30 minutes or less, or 20 minutes or less, as an example, for 5 minutes or more, preferably 10 minutes or more, 20 minutes or more, or 30 minutes or more. Within this range, all F component foreign substances such as LiF or metal fluorides formed on the surface of the cathode active material may be removed, and even then, excessive lithium extraction does not occur, so the capacity characteristics of a battery may be excellent.

The amount of the washing solution of step (a1) may be preferably 0.5 to 5 times, more preferably 0.5 to 4 times, still more preferably 0.8 to 3 times, still more preferably 0.9 to 2 times the weight of the recovered cathode active material. Within this range, residual F components such as LiF may be easily removed. In addition, the total amount of washing solution including the initial washing solution and the rinse solution may be significantly reduced, thereby reducing the amount of wastewater, wastewater treatment costs, and environmental pollution and improving the rate performance of a battery.

The amount of the rinse solution of step (a3) may be preferably 5 to 20 times, more preferably 5 to 15 times, still more preferably 8 to 15 times, still more preferably 8 to 13 times, still more preferably 8 to 12 times the weight of the recovered cathode active material. Within this range, the total amount of washing solution including the initial washing solution and the rinse solution may be significantly reduced, thereby reducing the amount of wastewater, wastewater treatment costs, and environmental pollution. In addition, the amount of the initial washing solution fed into a stirring tank may be minimized. In addition, since the amount of the rinse solution is controlled, residual F components may be easily removed, and the rate performance of a battery may be improved.

For example, the weight ratio of the washing solution of step (a1) to the rinse solution of step (a3) may be 1: 2 to 15, preferably 1: 7 to 15, more preferably 1: 7 to 13, still more preferably 1: 8 to 13, still more preferably 1: 8 to 12, still more preferably 1: 9 to 11. Within this range, since the residual F content is determined by the amount of a rinse solution, there is no need to replace equipment such as a stirring tank even when the amount of a cathode active material to be washed increases. In addition, the total amount of washing solution including the initial washing solution and the rinse solution may be significantly reduced, thereby reducing the amount of wastewater, wastewater treatment costs, and environmental pollution. In addition, the amount of the initial washing solution injected into a stirring tank may be minimized. In addition, by controlling the amount of the rinse solution, the residual F component may be easily removed and the rate performance of a battery may be improved.

Step (a-2) of performing washing may preferably include a process of collecting solids after the filtration or rinsing and drying the solids. In this case, the subsequent crystal structure recovery process may be optimized and easily performed.

The drying may be performed at preferably 50 to 200 °C, more preferably 50 to 150 °C, still more preferably 70 to 150 °C, still more preferably 100 to 150 °C until the weight stops changing, for example, for 1 to 24 hours. Within this range, moisture contained in the washed cathode active material may be effectively removed.

### (b) Restoring crystal structure of washed cathode active material

Step (b) of recovering the crystal structure according to the present invention may be a step of adding a lithium precursor to the recovered cathode active material and performing heat treatment in the air to recover the crystal structure of the cathode active material. In this case, a cathode active material having excellent initial discharge capacity, rate performance, capacity characteristics, and resistance characteristics may be provided.

Step (b) of recovering the crystal structure may be preferably a step of adding a lithium precursor to the cathode active material with the recovered crystal structure and performing heat treatment under oxygen(O₂) atmosphere or in the air at 400 to 1000 °C, more preferably 700 to 900 °C, still more preferably 710 to 780 °C. In this case, crystallinity may be improved. That is, the crystallinity of the cathode active material may be increased or the crystal structure thereof may be recovered. As a result, the battery characteristics of the recycled cathode active material may be improved.

The lithium precursor may preferably include one or more selected from the group consisting of LiOH, Li₂CO₃, LiNO₃, and Li₂O.

Preferably, based on the amount of lithium in the recovered cathode active material, the lithium precursor may be added in at least an amount corresponding to a reduced amount of lithium in the cathode active material of step (a). As a specific example, when the recovered cathode active material of step (a) is the cathode active material represented by Chemical Formula 1, based on 1 molar ratio of lithium in the cathode active material, the lithium precursor may be added in an amount corresponding to the molar ratio of 0.0001 to 0.2 of lithium, preferably an amount corresponding to the molar ratio of 0.001 to 0.02 of lithium, more preferably an amount corresponding to the molar ratio of 0.005 to 0.017 of lithium, still more preferably an amount corresponding to the molar ratio of 0.007 to 0.015 of lithium, still more preferably an amount corresponding to the molar ratio of 0.009 to 0.013 of lithium. Within this range, the lithium deficiency in the recycled cathode active material may be compensated, and thus crystallinity may be improved, that is, the crystallinity may be increased or the crystal structure may be recovered. Thus, the battery characteristics of the recycled cathode active material may be improved.

As another example, based on 100 mol% in total of lithium included in the cathode active material as a raw material, the lithium precursor may be added in an amount corresponding to 1 to 40 mol%, preferably 1 to 15 mol%, more preferably 1 to 10 mol%. Within this range, since there is no residual precursor that causes an increase in the resistance of the recycled cathode active material, battery characteristics may be improved. In addition, economic advantages may be obtained because the crystal structure may be recovered using a smaller amount of lithium precursor than conventional methods.

As another example, the heat treatment temperature may be controlled within a limited range depending on the melting point of the lithium precursor. For example, the melting point of LiCO₃ is 723 °C. In this case, the heat treatment may be performed preferably at 700 to 900 °C, more preferably 710 to 780 °C. Within this range, a crystal structure may be recovered, and thus the rate performance of a battery may be excellent.

The heat treatment temperature may preferably be a temperature exceeding the melting point of the lithium precursor. However, when the heat treatment temperature exceeds 1000 °C, thermal decomposition of the cathode active material may occur, which may result in a deterioration in battery performance. Accordingly, a heat treatment temperature of 1000 °C or lower may be desirable.

For example, the heat treatment time may be 1 hour or more or 15 hour or less, preferably 1 to 15 hours, more preferably 2 to 10 hours, still more preferably 3 to 8 hours, still more preferably 4 to 6 hours, as a specific example, about 5 hours. Within this range, the crystal structure may be sufficiently recovered and economic benefits may be obtained.

The heat treatment temperature may preferably be reached at a temperature increase rate of 1 to 10 °C/min, more preferably 1 to 5 °C/min, still more preferably 2 to 4 °C/min. In this case, the crystallinity of the recycled cathode active material may be further increased, thereby improving the battery characteristics of the recycled cathode active material.

For example, the crystal structure recovery step includes a cooling process, which may, as a specific example, be natural cooling within a furnace. In this case, the crystallinity of the recycled cathode active material may be further increased, thereby improving the battery characteristics of the recycled cathode active material.

In the present disclosure, the crystal structure recovery may follow the definition used in the technical field to which the present invention pertains. As a specific example, the crystal structure recovery may be defined as a heat treatment operation that heals deformation or lattice defects and appropriately regulates crystallinity by heating a cathode active material with a deformed structure or lattice defects for an appropriate period of time at a temperature, i.e., a temperature above a recrystallization temperature, that allows the atoms of main components in the cathode active material to sufficiently diffuse and move.

### Washing cathode active material having recovered crystal structure

Step (b-2) of washing the cathode active material having the recovered crystal structure according to the present invention (hereinafter referred to as 'post-washing') may be a step of mixing the cathode active material having the recovered crystal structure with a washing solution and performing filtration. In this case, a lithium compound remaining on the surface of the cathode active material having the recovered crystal structure may be removed, so that the battery characteristics may be improved.

In the post-washing, preferably, the cathode active material having the recovered crystal structure may be mixed with a washing solution and may be washed by filtration using a filter press. In this case, compared to conventional reduced pressure filtration, lithium remaining in the crystal structure recovery step may be washed away with a small amount of washing solution. Accordingly, the amount of wastewater, wastewater treatment costs, and environmental pollution may be reduced. In addition, even when the amount of a cathode active material to be washed increases, equipment such as a stirring tank does not need to be replaced. In addition, by removing a residual lithium compound from the recycled cathode active material, the initial discharge capacity, rate performance, and capacity characteristics of a battery may be significantly improved.

The weight of the washing solution may be preferably 0.5 to 5 times, more preferably 0.5 to 4 times, still more preferably 0.8 to 3 times, still more preferably 0.9 to 2 times, still more preferably 0.9 to 1.5 times the weight of the recovered cathode active material. Within this range, a lithium compound remaining on the surface of the cathode active material having the recovered crystal structure may be effectively removed without leaching of effective metals, so that the battery characteristics may be improved.

The cathode active material obtained after the post-washing may preferably have a residual precursor (e.g., LiOH) content of 1000 ppm or less, more preferably 800 ppm or less. Within this range, the residual lithium precursor may react with the dopant precursor in the subsequent doping step to suppress formation of an LiB₃O₅(LBO) coating layer on the surface of a recycled cathode active material, which improves the doping efficiency and battery characteristics.

Preferably, in addition to contents separately defined here, the post-washing may include all the contents of the step (a-2) of performing washing described above except for the rinsing step, and therefore, the repeated description will be omitted. However, in step (b-2), it may be desirable to use the rinse solution in a minimal amount (e.g., 1× or less, 0.5× or less, or 0.1× or less) or not use the rinse solution at all. In this case, the advantage of not leaching effective metals from the cathode active material having the recovered crystal structure may be obtained.

### (c) Doping cathode active material having recovered crystal structure

The method of recycling a cathode active material according to the present invention includes step (c) of adding a dopant precursor to the cathode active material having the recovered crystal structure and performing doping by heat treatment. In this case, by doping the recycled cathode active material with a dopant, capacity characteristics and lifespan characteristics may be improved, and crack resistance may be excellent.

For example, in step (c), the heat treatment may be performed at 300 to 1000 °C, preferably 300 to 600 °C, as a specific example, 400 to 900 °C, as a preferred example, 450 to 800 °C, as a more preferred example, 500 to 700 °C, as a still more preferred example, 550 to 650 °C. Within this range, loss of the recycled cathode active material due to deterioration may be prevented, and the recycled cathode active material may be stably doped with a dopant, thereby improving the capacity characteristics and lifespan characteristics and enhancing crack resistance.

For example, in step (c), the dopant precursor may be a compound that provides one or more elements selected from the group consisting of B, Ti, S, Na, Nb, P, Al, F, Mg, Mn, K, Y, Si, Sn, W, C, and N as a dopant, preferably a compound that provides one or more elements selected from the group consisting of B, Na, Mg, and F as a dopant. In this case, the dopant may be stably doped into the recycled cathode active material, and a surface coating layer may be easily removed by washing or rinsing, which greatly improves the capacity characteristics, lifespan characteristics, and crack resistance.

In step (c), based on a total weight of the recycled cathode active material, the dopant precursor may be preferably added in an amount of 100 to 2000 ppm (based on a dopant element), more preferably 300 to 1500 ppm, still more preferably 400 to 1200 ppm, still more preferably 500 to 1000 ppm, still more preferably 600 to 900 ppm. Within this range, the recycled cathode active material may be doped with the dopant, which greatly improves capacity characteristics and lifespan characteristics and enhances crack resistance.

As a specific example, step (c) may be a step of performing doping by adding or applying a dopant precursor alone or dissolved in a solvent to the cathode active material having the recovered crystal structure and then heat-treating the cathode active material, as a preferred example, a step of adding a dopant precursor alone to the cathode active material having the recovered crystal structure and doping through a solid-state reaction, i.e., heat treatment. In this case, by doping the recycled cathode active material with the dopant, capacity characteristics and lifespan characteristics may be improved, and crack resistance may be improved. Here, the liquid phase reaction using a solvent is highly efficient, and the solid phase reaction using only a dopant precursor is advantageous for mass production, so the reactions may be selectively applied as needed.

For example, the dopant precursor may be an oxide, acid, organometallic compound containing the dopant element.

The heat treatment time may be preferably 1 to 10 hours, more preferably 3 to 5 hours. Within this range, the recycled cathode active material may be doped with the dopant, which greatly improves capacity characteristics and lifespan characteristics and enhances crack resistance.

The heat treatment temperature may be reached at a temperature increase rate of preferably 1 to 10 °C/min, more preferably 1 to 7 °C/min, still more preferably 1 to 5 °C/min. Within this range, the recycled cathode active material may be doped with the dopant, which greatly improves capacity characteristics and lifespan characteristics and enhances crack resistance.

The heat treatment may be performed in the air or under oxygen atmosphere, preferably under oxygen atmosphere. In this case, the recycled cathode active material may be doped with the dopant, which greatly improves capacity characteristics and lifespan characteristics and enhances crack resistance.

For example, as the solvent, any solvent that does not affect the cathode active material may be used without particular limitation. For example, water or an organic solvent such as an alcohol may be used, and the alcohol may preferably be methanol or ethanol.

### Recycled cathode active material

A recycled cathode active material of the present invention is prepared using the method of recycling a cathode active material according to the present invention. In this case, by doping the recycled cathode active material with a predetermined dopant, capacity characteristics, lifespan characteristics, and crack resistance may be improved.

In addition, the recycled cathode active material of the present invention may include one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. The recycled cathode active material is doped with a dopant and has no coating layer. In this case, capacity characteristics and lifespan characteristics may be improved, and crack resistance may be excellent.

By doping, the dopant element enters the crystal structure of the cathode active material in a thickness of several nanometers on the surface of the post-washed cathode active material particles, so the increase in resistance at the surface of the cathode active material is greatly reduced compared to coating. Accordingly, the coating layer plays a role in increasing the battery lifespan, but the coating layer is a layer formed when an oxide generated by the dopant precursor reacting with the lithium compound or by thermal decomposition adheres to the surface of the post-washed cathode active material, and acts as a resistor, causing the lifespan characteristics to deteriorate. Therefore, in order to finish the recycled cathode active material with doping without a coating layer, it is important to add a predetermined dopant precursor to the cathode active material having the recovered crystal structure, heat-treat the cathode active material at a predetermined heat treatment temperature, and then wash the cathode active material according to a predetermined method to remove a coating layer and leave only the doped dopant.

For example, the coating layer may mean a collection of undoped dopant precursors that have changed into oxides and are attached to the surface of the cathode active material in the form of nodules. During the washing process, this coating layer is removed, and only the doped dopant remains in the recycled cathode active material.

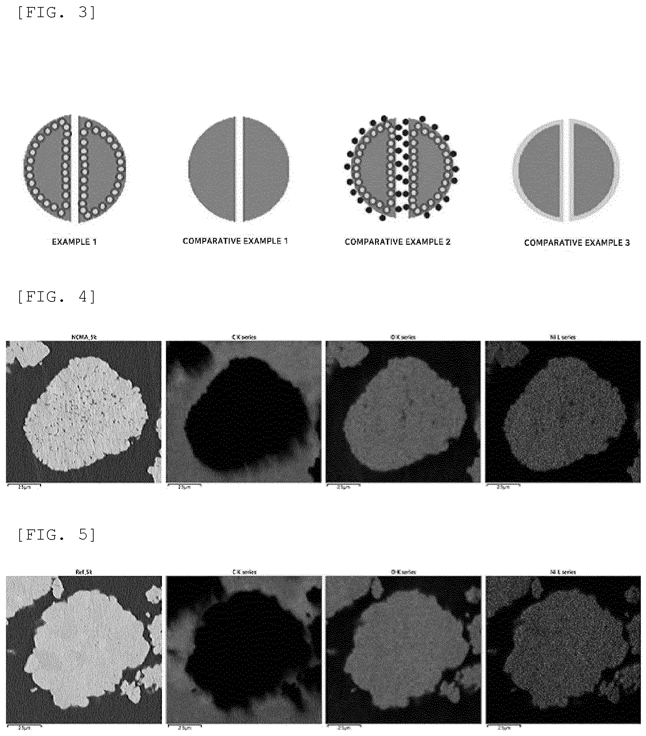

FIG. 3 below includes the schematic structures of the recycled cathode active material finished with doping without a coating layer prepared in Example 1 and the recycled cathode active material finished with a coating layer prepared in Comparative Example 2. By doping the recycled cathode active material prepared in Example 1 with a dopant instead of a conventional surface coating, side reactions between the coating layer and the cathode active material may be prevented. In addition, nickel (Ni) element on the surface of the cathode active material is reduced due to the influence of the dopant, thereby stabilizing the surface. As a result, the long-term lifespan characteristics may be improved, and the initial charge/discharge capacity may be increased. On the other hand, in the case of Comparative Example 2, a doping layer and a surface coating layer were formed on the recycled cathode active material. However, since the surface coating layer was not removed, cracks occurred in the interface between the surface of the cathode active material and the coating layer as the charge/discharge cycle progressed, which causes resistance between the different interfaces and deteriorates the long-term lifespan. Here, the surface coating layer may be a boron coating layer containing B₂O₃ and a trace amount of LBO (a reaction product between boric acid and LiOH remaining on the surface of the cathode active material).

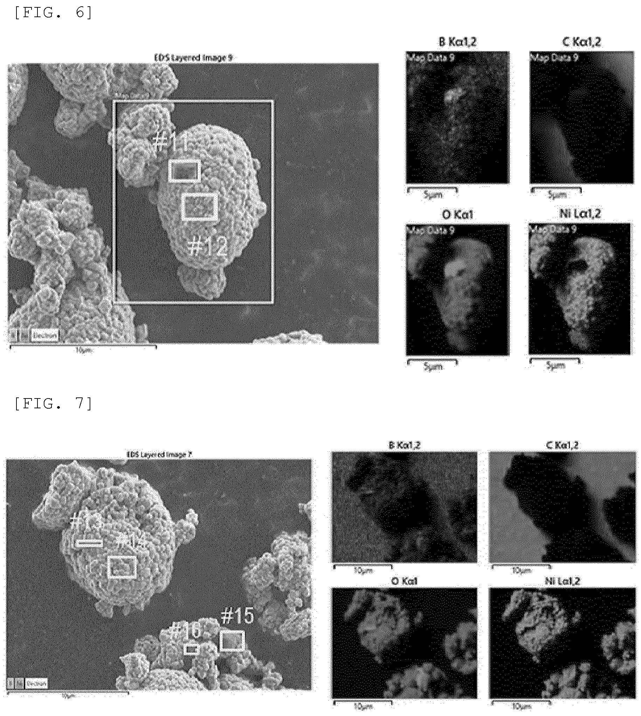

FIGS. 4 and 6 below include energy dispersive spectrometer (EDS) mapping images for the recycled cathode active materials prepared in Example 1 and Comparative Example 2. In the recycled cathode active material prepared in Example 1, the coating layer is removed by washing, leaving only the doped dopant, so that all surfaces are uniform, the same composition ratio is measured at any location of the recycled cathode active material, and no boron (B) element is found in surface analysis. On the other hand, in the recycled cathode active material of Comparative Example 2, which only was subjected to the coating step of doping and forming the coating layer and was not subjected to the coating layer removal (washing) step, a large amount of boron (B) element present in the coating layer is found.

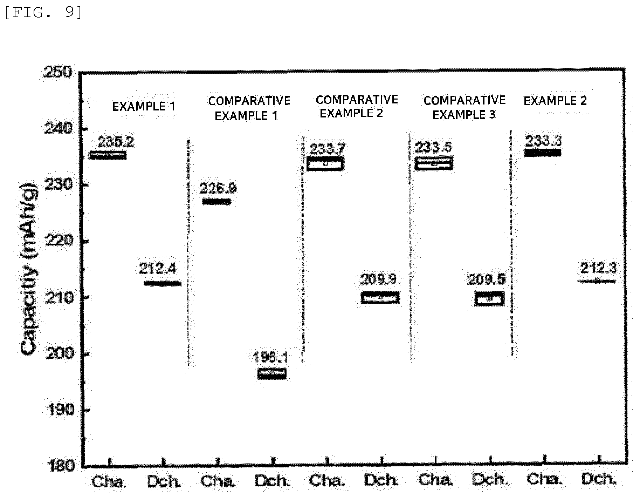

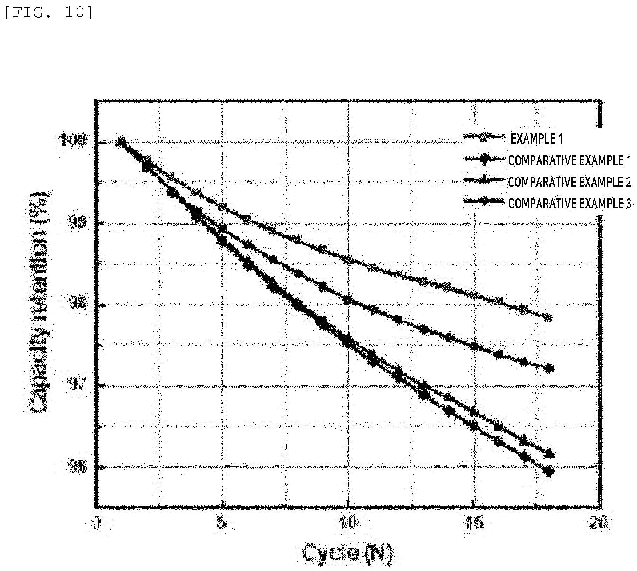

FIGS. 9 and 10 below include the initial charge/discharge capacity and the capacity retention change depending on cycle number for the recycled cathode active materials prepared in Example 1 and Comparative Example 2. In the case of the recycled cathode active material of Example 1 doped with a dopant without a coating layer, the surface resistance is reduced due to the doping effect, and the surface side reactions are suppressed, so the initial charge/discharge capacity and charge/discharge efficiency are excellent. In addition, the capacity retention, i.e., lifespan characteristics, are excellent because the surface resistance is low and the surface side reactions are suppressed. On the other hand, in the case of the recycled cathode active material of Comparative Example 2 including the coating layer, even though the doping was partially performed, the B₂O₃ coating layer and LiB₃O₅ coating layer acted as surface resistance, which lowered the initial charge/discharge capacity and charge/discharge efficiency, and degraded the lifespan characteristics.

Based on a total weight of the recycled cathode active material, the dopant may be included in an amount of preferably 100 to 2000 ppm, more preferably 300 to 1500 ppm, still more preferably 400 to 1200 ppm, still more preferably 500 to 1000 ppm, still more preferably 600 to 900 ppm. Within this range, capacity characteristics and lifespan characteristics may be greatly improved, and crack resistance may be excellent.

The dopant may preferably include one or more selected from the group consisting of B, Ti, S, Na, Nb, P, Al, F, Mg, Mn, K, Y, Si, Sn, W, C, and N, more preferably one or more selected from the group consisting of B, Na, Mg, and F. In this case, capacity characteristics and lifespan characteristics may be greatly improved, and crack resistance may be excellent.

Based on energy dispersive spectroscopy (EDS) surface mapping, in the recycled cathode active material, the amount of a dopant element that is coated (remained) on the surface without being doped may be 10 ppm or less, preferably 5 ppm or less. Within this range, resistance may be reduced, capacity characteristics and lifespan characteristics may be greatly improved, and crack resistance may be excellent.

Based on energy dispersive spectroscopy (EDS) surface mapping, the recycled cathode active material may preferably include 40 to 45 % by weight of carbon element, 25 to 30 % by weight of oxygen element, and 25 to 30 % by weight of nickel element, more preferably 42 to 45 % by weight of carbon element, 26 to 29 % by weight of oxygen element, and 27 to 30 % by weight of nickel element. Within this range, resistance may be reduced, capacity characteristics and lifespan characteristics may be greatly improved, and crack resistance may be excellent.

For example, the recycled cathode active material may have a residual F content of 8000 ppm or less, preferably 2000 ppm or less, more preferably 1800 ppm or less, still more preferably 1700 ppm or less, still more preferably 1600 ppm or less, as a specific example, 1 to 8000 ppm. In this case, the battery rate performance may be improved, and electrochemical performance, resistance characteristics and capacity characteristics may be excellent. In the present disclosure, in addition to LiF, the residual F content means the content of all residual F components in other residual components.

In the present disclosure, the residual F content may be measured by ion chromatography (IC) commonly used in the technical field to which the present invention pertains. As a specific example, an ion chromatography (IC)-inductively coupled plasma (ICP) analyzer, an IC-ICP-MS analyzer, or an IC-ICP-AEC analyzer may be used. In the present disclosure, the ion chromatography (IC)-inductively coupled plasma (ICP) analyzer may be preferably used.

As another specific example, the recycled cathode active material may be a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1. In this case, electrochemical performance, resistance characteristics, and capacity characteristics may be excellent.

Based on 100 mol% of the remaining metals or transition metals excluding Li, the recycled cathode active material may preferably include Ni in an amount of 80 mol% or more, more preferably 81 mol% or more, still more preferably 81 to 95 mol%. Within this range, charge capacity, resistance characteristics, and capacity characteristics may be excellent.

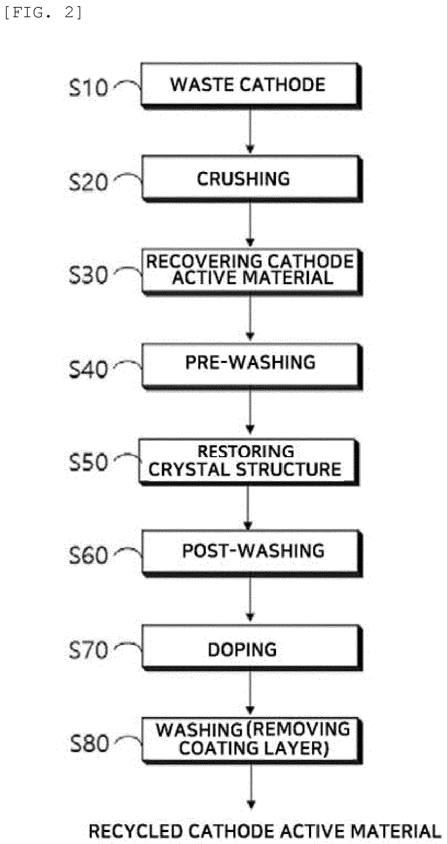

FIG. 2 below is a flowchart for explaining a process for recycling a cathode active material according to one embodiment of the present invention.

Referring to FIG. 2, first, cathode scraps as waste cathodes are prepared (step S10). For example, aluminum foil is coated with slurry prepared by adding N-methyl pyrrolidone (NMP) to an NCM-based lithium composite transition metal oxide, carbon black, and polyvinylidene fluoride and performing mixing, and then drying is performed in a vacuum oven set to about 120 °C to obtain a cathode sheet. Then, the cathode sheet is punched out to obtain a cathode plate of a certain size. In this process, cathode scraps are generated.

The cathode scrap includes aluminum foil and a cathode active material layer formed on the aluminum foil. After volatilizing a solvent, the cathode active material layer has a structure in which a cathode active material and a conductive material are combined by a binder.

Next, the prepared cathode scraps are crushed into pieces of appropriate sizes (step S20). Here, the crushing includes cutting or shredding cathode scraps into easy-to-handle sizes. As a specific example, the crushed cathode scraps may have a size of 1 cm × 1 cm. For example, the crushing may be performed using a dry crushing device such as a hand-mill, a disk-mill, a cutting-mill, and a hammer-mill. To increase productivity, a high-speed cutting machine may be used.

Preferably, whether to perform the crushing or the size of the pieces may be determined by considering the handling of cathode scraps and the characteristics of equipment used in the subsequent process. For example, when using equipment capable of continuous processing, cathode scraps must be crushed into smaller pieces because the pieces must have good fluidity.

Next, the crushed cathode scraps are heat-treated at 500 to 600 °C in the air to recover a cathode active material (step S30). Here, heat treatment is performed to thermally decompose a binder and a conductive material within a cathode active material layer.

Through the heat treatment under an air atmosphere, the binder and the conductive material in the cathode active material layer are thermally decomposed into CO₂ and H₂O and removed. Since the binder is removed, the cathode active material may be separated from a cathode active material layer.

It is important that the heat treatment is performed under an air atmosphere or under an oxygen atmosphere. When the heat treatment is performed in a reducing gas or inert gas atmosphere, the binder and the conductive material are carbonized rather than thermally decomposed. When the binder and the conductive material are carbonized, carbon components remain on the surface of the cathode active material, resulting in deterioration in the performance of a recycled cathode active material. In contrast, when the heat treatment is performed in the air, both the binder and the conductive material are removed because carbon components in the binder and conductive material reacts with oxygen, are converted into gases such as CO and CO₂, and disappears.

The heat treatment may be performed at a temperature increase rate of preferably 1 to 20 °C/min, more preferably 1 to 10 °C/min, still more preferably 3 to 8 °C/min, still more preferably 4 to 6 °C/min, as a specific example, 5 °C/min. Within this range, heat treatment may be performed without causing strain to heat treatment equipment, and thermal shock to cathode active material layer powder may be prevented.

The heat treatment may be performed until the binder is completely thermally decomposed. For example, the heat treatment may be performed for preferably 1.5 to 6 hours, preferably 2 to 5.5 hours, more preferably 3 to 5 hours, still more preferably 4 to 5 hours. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow or rapid cooling in the air may be performed.

Next, the washing step (hereinafter also referred to as 'pre-washing'), i.e., the surface modification step, is performed by mixing the recovered cathode active material with the washing solution and then filtering the mixture using a filter press (step S40).

The washing step has the advantage of effectively removing foreign substances generated on the surface of the cathode active material in the heat treatment step (step S30) even with a small amount of washing solution by including a filter press.

According to one embodiment of the washing step, the washing step may include a step of stirring the recovered cathode active material with a washing solution in a stirring tank to form slurry, filtering the slurry using a filter press to form filter cake in the filter press, and rinsing the filter cake formed inside the filter press with high pressure by pouring a rinse solution into the filter press. Here, the filtration and rinsing steps may be performed at the same pressure range. In addition, the agitator may be an impeller-type, magnetic-type, and/or ultrasonic agitator, without being limited thereto. However, when the viscosity of slurry is high or the amount of slurry is large, an impeller-type agitator capable of transmitting large force may be desirable.

For example, the washing solution may be water or a basic aqueous lithium compound solution. When it is necessary to replenish the amount of lithium that may be eluted from the cathode active material during the washing process, a basic aqueous lithium compound solution is preferable.

For example, the basic aqueous lithium compound solution may include an alkaline lithium compound in an amount of greater than 0 % by weight and 15 % by weight or less. When the lithium compound is not included, it is difficult to replenish lithium. When the amount exceeds 15 % by weight, an excessive amount of lithium compound may remain on the surface of the cathode active material, which may adversely affect the subsequent annealing process.

For example, the lithium compound is LiOH.

For example, the washing solution may be used in an amount of 0.5 to 5 times, preferably 1 to 2 times, more preferably about 1 time the weight of the recovered cathode active material.

For example, the stirring may be performed for 1 to 20 minutes, preferably 5 to 10 minutes. Within this range, the reduction in battery capacity due to excessive lithium extraction may be prevented.

For example, the stirring may be performed at 100 to 1000 RPM, preferably 250 to 750 RPM. Within this range, the reduction in battery capacity due to excessive lithium extraction may be prevented.

For example, the filter press operates under air pressure conditions of 2 to 10 bar and under air pressure conditions of 3 to 6 bar.

For example, the filter press is physically and chemically stable to the slurry and includes a frame, a filter plate, a filter cloth, a filter cloth pressurizing device, a filter plate separating device, a filter cloth washing device, and a conveying pump.

For example, the filter cloth may have a permeability of 0.1 to 15 cc/cm²(sec) or about 0.8 cc/cm²(sec).

The rinse solution may be used in an amount of 5 to 20 times, preferably about 10 times of the weight of the recovered cathode active material.

For example, the weight ratio of the washing solution to the rinse solution may be preferably 1 : 7 to 15 or 1 : 10.

The rinsed filter cake may be dried as needed. For example, drying may be performed at 50 to 150 °C in the air or under vacuum using an oven (convection type). However, in this embodiment, the drying process is not performed in consideration of heat treatment in the next step, crystal structure recovery step.

In the washing step (step S40), in the process in which the binder and conductive material inside the cathode active material layer are vaporized into CO₂ and H₂O and removed in the heat treatment step (step S30), LiF or metal fluorides formed by reacting Li₂CO₃ and LiOH generated by reaction with lithium and F existing in the binder, such as PVdF, with lithium or other metal elements constituting the cathode active material are removed. Accordingly, deterioration of battery characteristics is prevented when the cathode active material is reused.

In the present disclosure, % and ppm are based on weight unless otherwise specified.

Next, a lithium precursor is added to the washed cathode active material, and annealing is performed to recover the crystal structure (step S50).

In addition, loss of lithium in the cathode active material occurs during the preceding steps S30 and S40. In step S50, the loss amount of lithium is supplemented. In addition, during the preceding step, a deformed structure (e.g., Co₃O₄ in the case of an LCO active material) may be formed on the surface of the cathode active material. In step S50, the crystal structure of the cathode active material may be recovered, thereby improving the battery characteristics of a recycled cathode active material, or recovering the battery characteristics of the recycled cathode active material to the level of battery characteristics of a fresh cathode active material. Here, "fresh" is a concept opposite to "recycling", a fresh material means that the material was made for the first time, and the fresh material is the same word as "raw material" used in the examples.

The lithium precursor may preferably include one or more selected from the group consisting of LiOH, Li₂CO₃, LiNO₃, and Li₂O, as an example, LiOH.

Based on the molar ratio of lithium to other metals in a fresh cathode active material contained in the cathode active material layer, the lithium precursor is preferably added in a minimum amount corresponding to the lost lithium molar ratio. When an excess of lithium precursor is added relative to the amount of lithium lost, the unreacted lithium precursor may remain in a recycled cathode active material, which increases resistance. Accordingly, an appropriate amount of the lithium precursor needs to be added.

For example, when the molar ratio of lithium to other metals (M) in a fresh cathode active material is 1, the lithium precursor may be added in an amount such that the molar ratio of lithium is 0.001 to 0.4, preferably 0.01 to 0.4, more preferably 0.09 to 0.2. As a specific example, when the lithium precursor is added at a molar ratio, which corresponds to a loss ratio relative to a lithium content in a fresh cathode active material, based on ICP analysis results, the capacity may be increased to a level equivalent to that of the fresh cathode active material. Here, the ICP analysis results have an error value of about ±0.02.

For example, based on 100 mol% in total of lithium included in the washed cathode active material, the lithium precursor may be added in an amount corresponding to 1 to 40 mol%, preferably 1 to 15 mol%, more preferably 7 to 11 mol%. Within this range, since there is no residual precursor that causes an increase in the resistance of the recycled cathode active material, battery characteristics may be improved.

For example, the heat treatment may be performed in the air at 400 to 1000 °C, preferably at 600 to 900 °C. In this case, the temperature should be determined within a limited range according to the types of the lithium precursor.

The heat treatment temperature is preferably a temperature exceeding the melting point of the lithium precursor. However, since performance degradation occurs due to thermal decomposition of the cathode active material at a temperature exceeding 1000 °C, the heat treatment temperature should not exceed 1000 °C. When LiOH or Li₂CO₃ is used as the lithium precursor, the heat treatment temperature is preferably 700 to 900 °C, more preferably 710 to 780 °C, most preferably 750 to 780 °C.

For example, the heat treatment time is preferably 1 hour or more, more preferably 15 hours or less, still more preferably 5 to 13 hours. When the heat treatment time is long, a crystal structure may be sufficiently recovered, but even long-term heat treatment does not significantly affect performance. In this case, the same or similar equipment as in step S30 of performing heat treatment may be used as the heat treatment equipment.

Next, as the post-washing step, the cathode active material having a recovered crystal structure is mixed with a washing solution, stirring is performed, and then filtration is performed (step S60).

The post-washing step is a process to remove lithium compounds remaining in the cathode active material after the heat treatment of the crystal structure recovery step.

The post-washing step preferably includes a filter press, so that foreign substances generated on the surface of the cathode active material in the crystal structure recovery step (step S50) may be effectively removed even with a small amount of washing solution, and residual lithium and fine particles may be easily removed.

The post-washing step is preferably performed in the same manner as the washing step (step S40) described above, except that the washing solution is used in a minimum amount (e.g., 1 time the weight of the cathode active material) and no rinsing is performed. Accordingly, the description of the overlapping part will be omitted.

Next, a step of doping the post-washed cathode active material may be performed (step S70).

For example, the doping step is performed by adding a dopant precursor alone to the post-washed cathode active material and performing heat treatment (solid-state reaction). When the heat treatment temperature is too low, the amount of dopant doped into the cathode active material may be small, and the coating layer may be formed too large. When the heat treatment temperature is too high, the performance of a battery deteriorates due to thermal decomposition of the cathode active material and the dopant precursor itself.

By doping, the dopant element enters the crystal structure of the cathode active material in a thickness of several nanometers on the surface of the post-washed cathode active material particles, so the increase in resistance at the surface of the cathode active material is greatly reduced compared to coating. Accordingly, the coating layer plays a role in increasing the battery lifespan, but the coating layer is a layer formed when an oxide generated by the dopant precursor reacting with the lithium compound or by thermal decomposition adheres to the surface of the post-washed cathode active material, and acts as a resistor, causing the lifespan characteristics to deteriorate.

For example, the method of adding the dopant precursor to the post-washed cathode active material may be mixing, milling, spraying, or grinding.

Finally, in the step of removing the coating layer and leaving only the doped dopant, the doped cathode active material is mixed with the washing solution, stirred, and then filtered (step S80).

For example, the coating layer removal step is a step of mixing the doped cathode active material with the washing solution, stirring, and then filtering. For example, the coating layer may mean a collection of undoped dopant precursors that have changed into oxides and are attached to the surface of the cathode active material in the form of nodules. During the washing process, this coating layer is removed, and only the doped dopant remains in the recycled cathode active material.

In the coating layer removal washing step, the coating layer may be effectively removed even with a small amount of washing solution by using a filter press.

The washing solution may preferably be water.

The washing solution may be preferably used in an amount 1 to 10 times the weight of the doped cathode active material.

The filter cake of the recycled cathode active material after washing may be dried. For example, drying may be performed at 50 to 150 °C under vacuum or reduced pressure in the air using an oven (convection type).

The coating layer removal step may be performed in the same manner as the washing step (step S40) described above, except for the contents defined in this step. Therefore, the description of the overlapping portion will be omitted.

### Secondary battery

A secondary battery of the present invention includes the recycled cathode active material prepared using the method of recycling a cathode active material. In this case, by including a recycled cathode active material having improved capacity characteristics and lifespan characteristics and excellent crack resistance, battery rate performance may be greatly improved, and electrochemical performance and resistance characteristics may be excellent.

The secondary battery of the present invention may include all of the contents of the cathode active material and the method of recycling a cathode active material described above. Accordingly, redundant description thereof is omitted.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

After blanking a cathode plate, discarded cathode scraps (current collector: aluminum foil, cathode active material: NCM-based lithium composite transition metal oxide, the mol ratio of Ni:Co:Mn:Al is 88:6:4:2) were crushed, and the crushed scraps were heat-treated at 570 °C for 30 minutes in the air to remove a binder and a conductive material and separate a current collector and a cathode active material. Through these processes, the cathode active material was recovered. At this time, temperature was increased to the heat treatment temperature at a temperature increase rate of 5 °C/min, and air was supplied at a rate of 3 L/min.

The recovered cathode active material and 1% by weight of an aqueous LiOH solution (hereinafter referred to as 'washing solution') were mixed in a 1:1 weight ratio, stirred for 5 minutes under 700 RPM conditions to form slurry, and filtered (dehydrated) using a filter press (manufactured by Daesung Filter Co., Ltd., including a PP filter cloth with a permeability of 0.8 cc/cm²(sec)) to form filter cake inside the filter press. The filter cake formed in the filter press was rinsed with a rinse solution (same as the washing solution) having a weight 10 times that of the recovered cathode active material, and then the filter cake of the cathode active material was obtained.

Based on the molar ratio of lithium to other metals in the raw cathode active material (ICP analysis) (lithium molar ratio 1), the lithium precursor LiOH was added in an amount corresponding to a lithium molar ratio of 0.10 to 0.15 to the filter cake of the washed cathode active material, and heat treatment was performed at 750°C for 3 hours in the air (supply rate: 3 L/min) to recover the crystal structure of the cathode active material. In theory, the Li molar ratio of fresh cathode active material is 1, but since the average error of the ICP equipment used to check this is ±0.05, preferably ±0.02, the Li molar ratio of the raw material active material measured through ICP may be 1±0.05:1. In this experiment, the lithium precursor was added based on the molar ratio measured through ICP analysis.

The cathode active material with the recovered crystal structure and neutral water as a washing solution were mixed in a weight ratio of 1:1, stirred for 5 minutes under 700 RPM conditions to form a slurry, and then filtered (dehydrated) using a filter press in the same manner as the previous pre-washing to remove the residual Li compound and obtain a filter cake of the cathode active material. The filter cake of the obtained cathode active material was dried under reduced pressure at 110 °C to obtain a post-washed cathode active material.

The final recycled cathode active material was prepared by adding boric acid as a dopant precursor to the post-washed cathode active material in an amount corresponding to 700 ppm of boron (B) and heating at 600 °C for 5 hours, based on a total weight (based on dry mass) of the post-washed cathode active material. At this time, the temperature increase rate until reaching the heating temperature was 2 °C/min, and air was supplied at 3 L/min.

The doped cathode active material and neutral water as the washing solution were mixed in a weight ratio of 1:1, stirred for 2 minutes under 700 RPM conditions to form slurry, and then filtered (dehydrated) using a filter press in the same manner as the preceding post-washing to remove a coating layer and obtain a filter cake of the cathode active material. The obtained filter cake was dried under reduced pressure at 110 °C to obtain the final doped recycled cathode active material.

In the present disclosure, the molar ratio of lithium to other metals in the cathode active material was measured using an ICP analyzer. At this time, an ICP analysis device commonly used in laboratories may be used, but there is no difference depending on measurement devices or methods.

### Example 2

A recycled cathode active material was prepared in the same method as in Example 1, except that boric acid as the dopant precursor was added to a post-washed cathode active material in an amount corresponding to 1400 ppm of boron (B) based on a total weight (based on dry mass) of the post-washed cathode active material.

### Comparative Example 1

A recycled cathode active material was prepared in the same method as in Example 1, except that the step of adding a dopant precursor and performing heat treatment and the step of washing the doped cathode active material with a washing solution were omitted.

### Comparative Example 2

A recycled cathode active material was prepared in the same method as in Example 1, except that the step of washing the doped cathode active material with a washing solution was omitted.

### Comparative Example 3

A recycled cathode active material was prepared in the same method as in Example 1, except that boric acid (H₃BO₃) as the dopant precursor and LiOH as the lithium precursor were added in a mol ratio of 2:1, and the step of washing the doped cathode active material with a washing solution was omitted.

FIG. 3 below includes conceptual diagrams schematically illustrating the structures of the recycled cathode active materials prepared in Example 1 and Comparative Examples 1 to 3, respectively.

Referring to FIG. 3, the recycled cathode active material prepared in Example 1 was doped with a dopant rather than a conventional surface coating to prevent side reactions between the coating layer and the cathode active material. In addition, surface stabilization may be achieved due to the reduction effect of nickel (Ni) element on the surface of the cathode active material due to the influence of a dopant. As a result, long-term lifespan characteristics are improved and initial charge/discharge capacity is increased.

On the other hand, the recycled cathode active material prepared in Comparative Example 1 is a cathode active material that has been recycled without any additional surface modification from a cathode active material that has cracks caused by deterioration due to rolling during the cathode electrode manufacturing process or charge/discharge cycles. Unlike a fresh cathode active material, the recycled cathode active material of Comparative Example 1 has a large surface area due to cracks, which increases side reactions on the surface of the recycled cathode active material, causing deterioration in the performance of the recycled cathode active material.

In addition, in the case of Comparative Example 2, a doping layer and a surface coating layer were formed on the recycled cathode active material, but the surface coating layer was not removed, so cracks occurred between the interface of the surface of the cathode active material and the coating layer as the charge/discharge cycle progressed, which caused resistance to occur between the different interfaces and deteriorated the long-term lifespan. Here, the surface coating layer may be a boron coating layer containing B₂O₃ and a trace amount of LBO (a reaction product between boric acid and LiOH remaining on the surface of the cathode active material).

In addition, in Comparative Example 3, an attempt was made to improve the side effects caused by cracks by forming a coating layer on the surface of the recycled cathode active material. In this case, as the charge/discharge cycle progresses, cracks occur between the interface of the surface of the cathode active material and the coating layer, which causes resistance between the different interfaces and deteriorates the long-term lifespan. At this time, the surface coating layer may be a boron coating layer containing LBO as a main component due to LiOH being injected simultaneously with the dopant precursor.

### [Test Example I]

The surface composition and overall composition of the recycled cathode active materials obtained from Examples 1 and 2 and Comparative Examples 1 to 3 were measured by the following methods, respectively, and the results are shown in Table 1 below.
* Atomic percent (at%): The composition ratio was measured using an energy dispersive x-ray spectroscope (EDS). Here, an EDS equipment equipped with an extreme detector from AZtec was used under the conditions of 5 kV and 7 mm working distance.
* ICP analysis: Using an ICP analyzer, the content of residual F components, the ratio of lithium (Li) and other metals (M) in the cathode active material, and the content (mg/kg) of specific elements such as B and W were measured. At this time, measurements can be made using a general ICP analyzer widely used in laboratories, but there is no deviation depending on the measuring device or method.

**[Table 1]**

| wt% | Measurement point | Atomic percent (at%) | | | | |
|---|---|---|---|---|---|---|
| | | B | C | O | Ni | Total |
| Example 1 | - | 0 | 43.84 | 27.48 | 28.68 | 100.0 |
| Comparative Example 1 | - | 0 | 41.47 | 31.47 | 27.05 | 100.0 |
| Comparative Example 2 | #11 | 18.16 | 15.28 | 64.72 | 0 | 100.0 |
| | #12 | 0 | 8.00 | 64.03 | 26.26 | 100.0 |
| Comparative Example 3 | #13 | 14.35 | 19.40 | 61.08 | 4.97 | 100.0 |
| | #14 | 0 | 12.72 | 60.94 | 24.57 | 100.0 |
| | #15 | 8.76 | 13.84 | 75.30 | 1.45 | 100.0 |
| | #16 | 14.91 | 12.64 | 64.04 | 8.10 | 100.0 |

As shown in Table 1, in the case of the recycled cathode active material (Example 1) obtained through the doping step and coating layer removal (washing) step according to the present invention, as with the recycled cathode active material (Comparative Example 1) that did not undergo the doping step according to the present invention, no boron (B) atoms were found on the surface of the recycled cathode active material. FIGS. 4 and 5 below are energy dispersive spectrometer (EDS) cross-sectional mapping images of the recycled cathode active materials prepared in Example 1 and Comparative Example 1, respectively. In each drawing, the three images on the right are color-coded images to distinguish the carbon (C), oxygen (O), and nickel (Ni) elements, respectively.

Referring to FIGS. 4 and 5, in the case of the recycled cathode active material prepared in Example 1, only the doped dopant remains and the coating layer is removed by washing, so that all surfaces are uniform. In the case of the recycled cathode active material prepared in Comparative Example 1, the doping step is omitted, so the boron coating layer is not formed, and thus it can be confirmed that all surfaces are uniform. Therefore, the same composition ratio is measured at any location of the recycled cathode active material.

For reference, in the case of recycled cathode active material (Comparative Example 2) that was subjected only to the doping step and not to the coating layer removal (washing) step, or in the case of recycled cathode active material (Comparative Example 4) that was prepared by adding boric acid and LiOH in the doping step to induce boron (B) atoms to react with LiOH before being inserted as a dopant to form a coating layer, a large amount of boron (B) element is found on the surface.

FIGS. 6 and 7 below are energy dispersive spectrometer (EDS) cross-sectional mapping images of the recycled cathode active materials prepared in Comparative Example 2 and Comparative Example 3, respectively. In each drawing, the four images on the right are color-coded images to distinguish the elements boron (B), carbon (C), oxygen (O), and nickel (Ni), in that order.

Referring to FIG. 6, in the case of the recycled cathode active material prepared in Comparative Example 2, a B₂O₃ coating layer was formed because additional LiOH was not added together with the dopant precursor. Accordingly, elemental analysis was performed at point #11 where a B₂O₃ coating layer was formed and point #12 where a B₂O₃ coating layer was not formed.

Referring to FIG. 7, in the case of the recycled cathode active material prepared in Comparative Example 3, an LBO coating layer was formed by adding additional LiOH together with a dopant precursor. Accordingly, elemental analysis was performed at points #13, #15, and #16 where an LBO coating layer was formed and point #14 where an LBO coating layer was not formed.

Table 2 below shows the boron (B) content measured by IPC analysis.

**[Table 2]**

| Classification | B content (weight ppm) |
|---|---|
| Example 1 | 213 |
| Example 2 | 217 |
| Comparative Example 1 | 0 |
| Comparative Example 2 | 640 |
| Comparative Example 3 | 680 |

As shown in Table 2, in the case of the recycled cathode active material (Example 1) obtained through the doping step and coating layer removal (washing) step according to the present invention, although the surface analysis using EDS did not detect the boron (B) element, the overall component analysis using IPC analysis detected the boron (B) element, confirming that the recycled cathode active material was doped with a dopant. In addition, in the case of Example 2, a similar level of boron (B) was detected even though the amount of boron compound added was doubled, confirming that even when a larger amount of boron compound was added compared to Example 1, only a similar amount was doped with the dopant and the remainder was removed in the final washing step. On the other hand, in the case of the recycled cathode active material (Comparative Example 1) that was not subjected to the doping step, boron (B) element was not found in IPC analysis. In the case of the recycled cathode active materials (Comparative Examples 2 and 3) where only the doping step was performed and the coating layer removal (washing) step was not performed, compared to Example 1, from the appearance of excess boron (B), it can be seen that the boron (B) element doped as a dopant and the boron (B) element present in the coating layer are combined.

### [Test Example II]

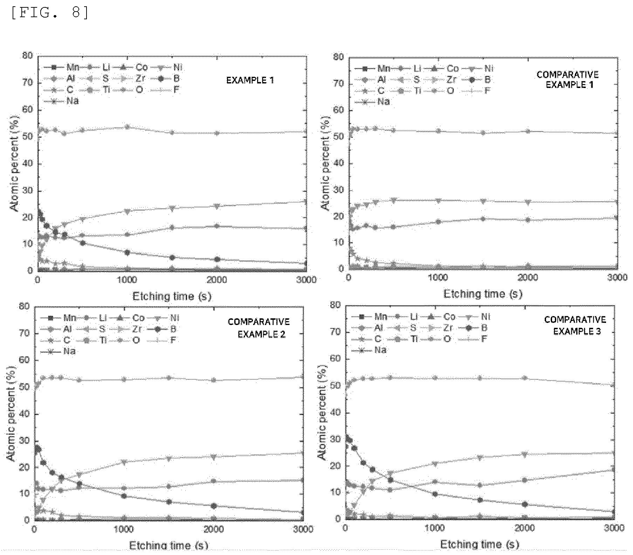

The change in the content of detected elements according to the X-ray etching time of the recycled cathode active materials obtained from Example 1 and Comparative Examples 1 to 3 was measured through X-ray diffraction analysis (Thermo Ficher Scientific Inc., k-alpha system), and the results are shown in FIG. 8 below.

As shown in FIG. 8 below, in the case of the recycled cathode active material of Example 1 obtained through the doping step and coating layer removal (washing) step according to the present invention, since the recycled cathode active material was subjected to a coating layer removal (washing) step, B₂O₃ generated on the surface as the coating layer was removed, so only the doped boron (B) element dopant was detected. Based on these results, it was confirmed that a lower content of boron (B) element was detected compared to the recycled cathode active materials of Comparative Examples 2 and 3.

On the other hand, in the case of the recycled cathode active material of Comparative Example 1, since boric acid was not added, boron (B) element was not detected. The recycled cathode active materials of Comparative Examples 2 and 3 have similar levels of boron (B) element detected. However, unlike Comparative Example 3, Comparative Example 2 did not use additional Li precursors (LiOH, Li₂CO₃, etc.) that can form a LiB₃O₅ coating layer, so the Li content is relatively low and the B₂O₃ coating layer was formed at 600 °C, which is the thermal decomposition temperature of boric acid.

### [Test Example III: CHC cell evaluation]

The electrochemical performance of the recycled cathode active materials obtained from Example 1 and Comparative Examples 1 to 3 was measured through the following CHC cell evaluation, and the results are shown in FIGS. 9 and 10.
* CHC cell manufacturing: 96 % by weight of a recycled cathode active material, 2 % by weight of carbon black as a conductive material, and 2 % by weight of PVdF as a binder were prepared and mixed with an NMP to obtain slurry. Aluminum foil was coated with the slurry to manufacture a cathode. Then, a cell (coin half cell, CHC) was manufactured. The electrochemical performance (charge capacity: CH, discharge capacity: DCH, and efficiency: Eff(%)) was evaluated under the conditions of including ethylene carbonate (EC): dimethyl methyl carbonate (DMC) = 3:7 (weight ratio) as the electrolyte solution and other additives.
* Initial capacity (CH and DCH) evaluation of a cell: At 25 °C, one charge/discharge cycle was performed on each cell under the following conditions, and the results are shown in FIG. 9 below.
   Charge (CH): 0.2C, CC/CV, 4.25V, 0.05C cut-off
   Discharge (DCH): 0.2C, CC, 2.5V, cut-off
* Charge/discharge efficiency of cell (Eff): The charge/discharge efficiency was calculated using the following Equation 1 using the charge capacity and discharge capacity obtained from the initial capacity evaluation of the cell. Charge/discharge efficiency (%) = [Discharge capacity (mAh/g) / charge capacity (mAh/g)] × 100

FIG. 9 below is a graph showing the charge capacity of coin half cells manufactured using the recycled cathode active materials prepared in Examples 1 and 2 and Comparative Examples 1 to 3.

Referring to FIG. 9, in the case of the recycled cathode active material of Example 1, which was doped with boron (B) element without a coating layer through the doping step and coating layer removal (washing) step according to the present invention, it was confirmed that the surface resistance was reduced due to the doping effect, which suppressed surface side reactions and resulted in the best initial charge/discharge capacity and charge/discharge efficiency. In addition, for Example 2, it was confirmed that the results were similar to those of Example 1 because the amount of dopant doped into the recycled cathode active material was similar to that of the recycled cathode active material of Example 1.

On the other hand, the recycled cathode active material of Comparative Example 1 did not undergo the doping step, so no doping or coating is formed, and thus the initial charge/discharge capacity and charge/discharge efficiency are the worst. In the case of the recycled cathode active materials of Comparative Examples 2 and 3 that only went through the doping step and not the coating layer removal (washing) step, it was confirmed that even though some doping was performed, the B₂O₃ coating layer and LiB₃O₅ coating layer, respectively, acted as surface resistance, resulting in a decrease in the initial charge/discharge capacity and charge/discharge efficiency.

* Evaluation of capacity retention (%): After formation of each cell at 0.1 C rate, 0.33/0.33 C charge/discharge, 0.05 C cut-off CC/CV charge, and CC discharge were performed at 45 °C. The measurement was performed using a PNE-0506 charger/discharger (manufacturer: PNE Solution Co., Ltd.), and the discharge capacity when performed once was set as the initial capacity. Then, the discharge capacity in each cycle is compared with the initial capacity (100 %) to calculate the capacity retention by Equation 2 below, and the results are shown in FIG. 10. Capacity retention (%) = (Discharge capacity after cycle/Initial discharge capacity) ×100

FIG. 10 below is a graph showing the change in capacity retention according to the cycle number as a result of the coin half cell evaluation for each of the recycled cathode active materials prepared in Example 1 and Comparative Examples 1 to 3.

Referring to FIG. 10, in the case of the recycled cathode active material of Example 1, which was doped with boron (B) element without a coating layer through the doping step and coating layer removal (washing) step according to the present invention, it was confirmed that the surface resistance was reduced due to the doping effect, which suppressed surface side reactions and resulted in the best capacity retention, i.e., lifespan characteristics.

On the other hand, the recycled cathode active material of Comparative Example 1 has the worst lifespan characteristics because the recycled cathode active material did not undergo the doping step and thus no doping or coating was formed. In the case of the recycled cathode active material of Comparative Example 2, which was subjected only to the doping step and not to the coating layer removal (washing) step, even when some doping was performed, the B₂O₃ coating layer acts as surface resistance, which reduces the lifespan characteristics. In the case of the recycled cathode active material of Comparative Example 3, where LiOH was added in the doping step of Comparative Example 2, Even though some doping was performed, it was confirmed that the LiB₃O₅ coating layer acted as a surface resistance, which deteriorated the lifespan characteristics, although less than the B₂O₃ coating layer.

### [Description of Symbols]

- 10 :: CURRENT COLLECTOR
- 20 :: ACTIVE MATERIAL LAYER
- 30 :: CATHODE SHEET
- 40 :: CATHODE PLATE
- 50 :: CATHODE SCRAPS

## Claims

1. A recycled cathode active material, comprising one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide,
wherein the recycled cathode active material is doped with a dopant, and has no coating layer.

2. The recycled cathode active material according to claim 1, wherein, based on a total weight of the recycled cathode active material, the dopant is comprised in an amount of 100 to 2000 ppm.

3. The recycled cathode active material according to claim 1, wherein the dopant comprises one or more selected from the group consisting of B, Ti, S, Na, Nb, P, Al, F, Mg, Mn, K, Y, Si, Sn, W, C, and N.

4. The recycled cathode active material according to claim 1, wherein, based on energy dispersive spectroscopy (EDS) surface mapping, in the recycled cathode active material, an amount of a dopant element coated on a surface thereof without being doped is 10 ppm or less.

5. The recycled cathode active material according to claim 1, wherein, based on energy dispersive spectroscopy (EDS) surface mapping, the recycled cathode active material comprises 40 to 45 % by weight of carbon element, 25 to 30 % by weight of oxygen element, and 25 to 30 % by weight of nickel element.

6. A method of recycling a cathode active material, comprising:
(a) heat-treating a waste cathode containing a current collector and a cathode active material layer coated on the current collector in air or under oxygen atmosphere to recover a cathode active material;
(b) adding a lithium precursor to the recovered cathode active material and performing heat treatment in air to restore a crystal structure of the cathode active material;
(c) adding a dopant precursor to the cathode active material having the restored crystal structure and performing doping by heat treatment; and
(d) washing the doped cathode active material with a washing solution.

7. The method according to claim 6, wherein, in step (a), the heat treatment is performed at 300 to 650 °C.

8. The method according to claim 6, wherein, in step (b), the heat treatment is performed at 400 to 1000 °C.

9. The method according to claim 6, wherein, in step (b), the lithium precursor comprises one or more selected from the group consisting of LiOH, Li₂CO₃, LiNO₃, and Li₂O.

10. The method according to claim 6, wherein, in step (c), the heat treatment is performed at 300 to 1000 °C.

11. The method according to claim 6, wherein, in step (c), the dopant precursor is a compound that provides one or more elements selected from the group consisting of B, Ti, S, Na, Nb, P, Al, F, Mg, Mn, K, Y, Si, Sn, W, C, and N as a dopant.

12. The method according to claim 6, wherein, in step (d), the washing solution is water.

13. The method according to claim 6, comprising (a-2) washing the recovered cathode active material with a washing solution; (b-2) washing the cathode active material having the recovered crystal structure with a washing solution; or both.

14. The method according to claim 6, wherein, in step (a-2), the washing solution is water, or a basic aqueous lithium compound solution with an amount of greater than 0 % by weight and 15 % by weight or less, and in step (b-2), the washing solution is water.

15. The method according to claim 6, wherein, in step (c), based on a total weight of the recycled cathode active material, the dopant precursor is added in an amount of 100 to 2000 ppm based on a dopant element.

16. The method according to claim 6, wherein the cathode active material comprises one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide.

17. A recycled cathode active material prepared using the method according to any one of claims 6 to 16.

18. A secondary battery comprising the recycled cathode active material according to any one of claims 1 to 5.
